(19) Europäisches Patentamt
European Patent Office
Office européen des brevets

(11) **EP 4 759 862 A2**

(12) **EUROPEAN PATENT APPLICATION**

(43) Date of publication:
**17.06.2026 Bulletin 2026/25**

(21) Application number: **26174855.2**

(22) Date of filing: **28.02.2024**

(51) International Patent Classification (IPC):
***C08G 65/332*** *(2006.01)*

(52) Cooperative Patent Classification (CPC):
**C08G 65/3322; C08G 69/10; C08G 69/40; C08G 73/028; C08G 81/00; C08G 83/004;**
C08G 2650/30

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Validation States:
**GE KH MA MD TN**

(30) Priority:
**28.02.2023 KR 20230027045**
**27.02.2024 KR 20240027834**
**27.02.2024 KR 20240028422**
**27.02.2024 KR 20240028423**

(62) Document number(s) of the earlier application(s) in accordance with Art. 76 EPC:
**24764210.1 / 4 674 893**

(71) Applicant: **Chung Ang University Industry Academic Cooperation Foundation**
**Seoul 06974 (KR)**

(72) Inventors:
- **NA, Dong Hee**
  **06974 Seoul (KR)**
- **KIM, Jae Cheon**
  **06237 Seoul (KR)**
- **JIN, Lan**
  **06970 Seoul (KR)**

(74) Representative: **Office Freylinger**
**P.O. Box 48**
**8001 Strassen (LU)**

Remarks:
This application was filed on 27-04-2026 as a divisional application to the application mentioned under INID code 62.

# (54) ABSORPTION ENHANCERS FOR ORAL DELIVERY OF BIODRUGS

(57) The present invention relates to, for oral delivery of biodrugs, a PEGylated distearoyl phosphatidylethanolamine-KLA peptide conjugate, and a composition for enhancing absorption, in the gastrointestinal tract, of a biodrug for oral administration containing same as oral absorption enhancers, the conjugate of the present invention reducing cytotoxicity due to the cell permeable properties of a KLA peptide, and maintaining a tight junction modulation function of KLA through effects such as increasing resistance to proteolytic enzymes in the gastrointestinal tract, so as to promote gastrointestinal absorption of biodrugs such as peptides, proteins, polysaccharides, and antibodies when orally administrated, and thus being able to be usefully employed in increasing the bioavailability of a drug.

FIG. 1

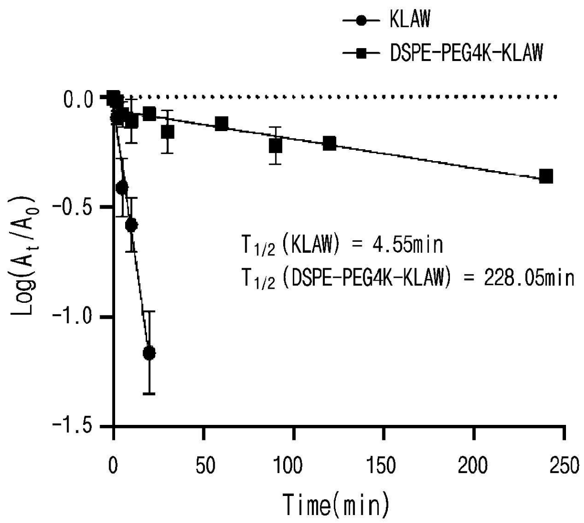


EP 4 759 862 A2

## Description

## BACKGROUND OF THE INVENTION

### 1. Field of the Invention

The present invention relates to an absorption enhancer in the gastrointestinal tract made on the basis of a peptide conjugate for the purpose of oral delivery of peptide and protein drugs.

### 2. Description of the Related Art

Biodrugs include biological pharmaceuticals, which are produced by biological processes such as cell culture using raw materials derived from humans or other living organisms, and peptide drugs, which are amino acid polymers produced synthetically. Biodrugs such as peptides, proteins, and antibodies are therapeutic agents with great therapeutic value in terms of efficacy and safety, and have shown continuous growth in the pharmaceutical field in recent years.

In particular, peptides are considered endogenous signaling molecules and have great therapeutic value. In general, peptides are amino acid polymers with 40 or fewer amino acids or a molecular weight of 5,000 Da or less, and despite their relatively small molecular weight compared to proteins, they have been limited to injectable administration due to their low gastrointestinal tract permeability and enzymatic degradation. With the recent development of peptide drugs for the treatment of metabolic diseases, drug administration using injections in situations where continuous and repeated administration is required is causing discomfort to patients and has a significant impact on patient compliance.

Biodrugs, which are mostly developed and used as injectable drugs, have been developed in a direction that improves the problems of injectable drugs by developing sustained-release or long-acting formulations for patient convenience. However, the development of oral administration formulations using relatively small-molecule peptide drugs has attracted much attention in recent years. Representative oral delivery technologies for peptide and protein drugs include gastrointestinal permeation enhancer, hydrophobic modification by ion pairing, nanoparticles, self-emulsifying drug delivery system, transporter-mediated system, and microneedle device.

Oral drug delivery technology utilizing gastrointestinal permeation enhancers is the most representative strategy that can be applied to peptide and protein drugs. The major gastrointestinal permeation enhancers studied to date can be classified into small molecule chemical permeation enhancers and peptide-based permeation enhancers.

Representative examples of small molecule chemical permeation enhancers include MCFA, Eligen™ technology-based absorption enhancers (SNAC, 5-CNAC, and 4-CNAB), EDTA, bile salts, acyl carnitine, and alkylmaltoside, which have been applied and studied in a variety of biodrugs. Small molecule chemical permeation enhancers have the advantage of having been used for a long time compared to peptide-based permeation enhancers, so safety data has been accumulated. However, they have the disadvantage of requiring very large amounts to be added to the formulation to achieve a permeation enhancing effect, and their targets are often unclear in terms of their mechanism of action (Adv. DrugDeliv. Rev., 2016, 106, 277-319).

Peptide-based permeation enhancers include microbial toxins such as C-CPE, AT1002, and angubindin-1, as well as KLAL peptides, which are synthetic peptides developed using phage display technology. In the prior art, Alexandra Bocsik et al. (2019) revealed that the KLAL peptide simultaneously acts as a cell-permeating peptide (CPP) and a tight junction regulator. WO 2007/014391 discloses that a compound containing the KLAL peptide or a modified peptide thereof modulates mucosal permeability, and US 2007/0154449 discloses a tight junction modulating peptide with excellent cell permeability.

Meanwhile, there are two pathways through which substances pass through the gastrointestinal tract: the paracellular pathway and the transcellular pathway. The paracellular pathway is a pathway through which substances pass through the gaps between cells, and substances with small molecular weights pass through the barrier through this way. Tight junctions can affect the permeation of substances into the gastrointestinal tract by modulating this pathway. When tight junctions are loosened due to intestinal irritation or injury, harmful molecules (pathogens, toxins, antigens, etc.) can be over-permeable to the intestinal epithelium, leading to endotoxemia, mucosal immune system disruption, and inflammatory responses, which may ultimately lead to intestinal or systemic diseases.

Most peptide permeation enhancers are tight junction modulation functional agents that target tight junction proteins. Therefore, if a peptide permeation enhancer acts as a penetration enhancer in the gastrointestinal tract and is then absorbed systemically, various safety issues may arise. In fact, when C-CPE was intravenously injected into a mouse model, it was confirmed that 14.4% of the administered dose accumulated in the kidneys by day 4 post-dose, and hepatotoxicity was confirmed in a toxicity test.

Accordingly, a peptide-based gastrointestinal tract membrane permeation enhancer must prevent the substance itself from being absorbed in large amounts and causing systemic side effects, and must ensure stability against digestive enzymes so as not to be decomposed by digestive enzymes in the gastrointestinal tract.

There are many problems that need to be addressed for peptide permeation enhancers to function as absorption enhancers for oral administration, and the actual development of oral peptide drugs lags behind small molecule compound permeation enhancers, and no case has entered clinical trials yet.

Accordingly, the present inventors have made efforts to solve the above problems and, as a result, have prepared a PEGylated distearoyl phosphatidylethanolamine-KLA peptide conjugate. The present inventors also completed this invention by confirming that these conjugates can significantly enhance the absorption of orally administered biodrugs in the gastrointestinal tract by exhibiting the property of opening the tight junctions of gastrointestinal tract membrane cells while reducing cytotoxicity due to the cell permeable properties of KLA.

## SUMMARY OF THE INVENTION

It is an object of the present invention to provide a PEGylated distearoyl phosphatidylethanolamine-KLA peptide conjugate to enhance the absorption of orally administered biodrugs in the gastrointestinal tract by reducing the cytotoxicity of the KLA peptide itself, while activating the tight-junction modulation function, and further increasing the resistance to digestive enzymes in the gastrointestinal tract, thereby maintaining the activity of KLA.

In addition, it is an object of the present invention to provide a composition for enhancing oral absorption of biodrugs in the gastrointestinal tract, comprising the PEGylated distearoyl phosphatidylethanolamine-KLA peptide conjugate.

To achieve the above objects, the present invention provides a PEGylated distearoyl phosphatidylethanolamine-KLA peptide conjugate comprising a plurality of KLA peptides having tight junction modulation function conjugated to a polyethylene glycol structure.

In addition, the present invention provides a composition for enhancing gastrointestinal tract absorption of biodrugs such as peptides, proteins, and antibodies comprising said conjugate.

## ADVANTAGEOUS EFFECT

The present invention relates to a drug absorption enhancer in the gastrointestinal tract for oral delivery of biodrugs. The PEGylated distearoyl phosphatidylethanolamine-KLA peptide conjugate of the present invention can be effectively used to increase the bioavailability of biodrugs such as peptides, proteins, polysaccharides, and antibodies, by increasing the absorption of drugs when administered orally.

## BRIEF DESCRIPTION OF THE DRAWINGS

Figure 1 is a graph showing the results of a stability test for trypsin-induced degradation of a KLAW peptide and a DSPE-PEG4k-KLAW conjugate.

Figures 2and 3are graphs showing the cytotoxicity results of a KLAW peptide and a DSPE-PEG4k-KLAW conjugate by MTT assay.

Figures 4 and 5 are graphs showing the cytotoxicity results of a KLAW peptide and a DSPE-PEG4k-KLAW conjugate by LDH assay.

Figure 6 is a graph showing the results of measuring the change in transepithelial/endothelial electrical resistance (TEER) depending on the concentrations of a KLAW peptide and a DSPE-PEG4k-KLAW conjugate in a Caco-2 monolayer membrane.

Figure 7 is a graph showing the results of measuring the change in transepithelial/endothelial electrical resistance (TEER) depending on the concentrations of PEG-MAL-5K-KLAW and DSPE-PEG4k-KLAW conjugates in a Caco-2 monolayer membrane.

Figure 8 is a graph showing the results of a permeability test for Leuprolide after treatment with conjugates using PEG-MAL-5K-KLAW and DSPE-PEG4k-KLAW by concentration in a Caco-2 monolayer membrane.

Figure 9 is a graph showing the results of a permeability test for Semaglutide after treatment with a DSPE-PEG4k-KLAW conjugate at various concentrations in a Caco-2 monolayer membrane.

Figure 10 is a graph showing the results of a permeability test for immunoglobulin G (IgG) after treatment with a DSPE-PEG4k-KLAW conjugate at various concentrations in a Caco-2 monolayer membrane.

## DESCRIPTION OF THE PREFERRED EMBODIMENTS

Hereinafter, the present invention is described in detail.

The present invention provides a PEGylated distearoyl phosphatidylethanolamine-KLA peptide conjugate in

which a tight junction modulation function peptide, KLA peptide, is conjugated to a self-assembly micelle structure made of polyethylene glycol (PEG) and a phospholipid chain.As used herein, the term "tight junction modulation function" refers to a function that induces a temporary opening of a tight junction and is intentionally used to distinguish it from "tight junction opening," which is a permanent or irreversible opening of a tight junction.

Said KLA peptide is a KLAL peptide or a modified peptide thereof.

The KLA peptide according to the present invention is a polypeptide having a length of 12 to 32 amino acids and consisting of three kinds of amino acids: Lys, Leu, and Ala.

The modified KLAL peptide according to the present invention is a polypeptide having a length of 13 to 40 amino acids, which is composed of three amino acids, Lys, Leu, and Ala, and one to two additional amino acids selected from Trp and Cys.

A representative example of the KLA peptide according to the present invention is a KLAL peptide having an amino acid sequence represented by KLALKLALKALKAALKLA of formula 2, which has a molecular weight of 1876.5 Da, a theoretical isoelectric point (pI) of 10.6, is rich in lysine, and is cell-penetrating.

The KLA peptide according to the present invention may be a modified KLAL peptide in which the 4th and/or 15th leucine (Leu) of the KLAL peptide represented by the following formula 2 is substituted with tryptophan (Trp).

The KLA peptide according to the present invention may be a modified KLAL peptide additionally including cysteine (Cys) at the C-terminus or N-terminus of the KLAL peptide represented by the following formula 2. Cysteine is added to form disulfide bonds, thioether bonds, and succinimidyl thioether bonds with polyethylene glycol.

The PEGylated distearoyl phosphatidylethanolamine-KLA peptide conjugate of the present invention are distinguished from the structure of [Formula 1] in which a single KLA peptide is usually bound to polyethylene glycol.

[Formula 1]

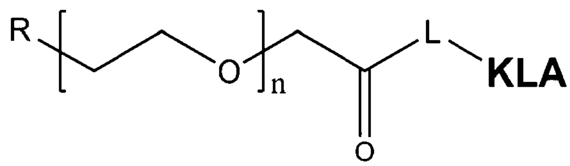

Herein, R is a terminal structural modification group of PEG, which may be hydrogen, a hydroxyl group, or a substituted or unsubstituted alkoxy group. In the substituted alkoxy group, the hydrogen in the alkyl group can be substituted by a substituent selected from the group consisting of halo, trifluoromethyl, difluoromethyl, amino, alkylamino, cyano, sulfonyl, sulfonamide, sulfoxide, hydroxy, alkoxy, ester, carboxylic acid, alkylthio aryl, C3 to C8 cycloalkyl, C4 to C7 heterocycloalkyl, heteroarylalkyl and heteroaryl.

L is a linker connecting PEG and a KLA peptide, represented by the following formula, * indicates a binding point of PEG and the linker L, # indicates a binding point of the linker L and the KLA peptide, and n is 2 to 2000, preferably 10 to 500.

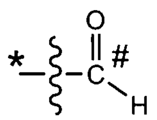

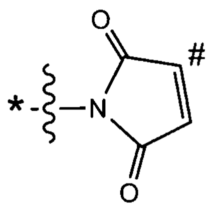

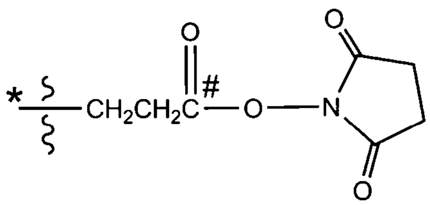

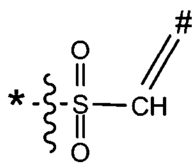

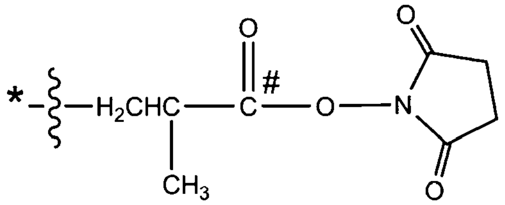

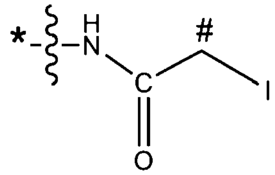

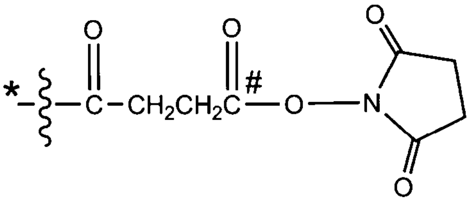

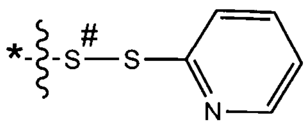

R plays a role in inactivating chemical reactivity by substituting the -OH group, which is the terminal group of PEG.

In a preferred embodiment, the structure of the PEGylated distearoyl phosphatidylethanolamine-KLA peptide conjugate is as shown in [Formula 2] below.

[Formula 2]

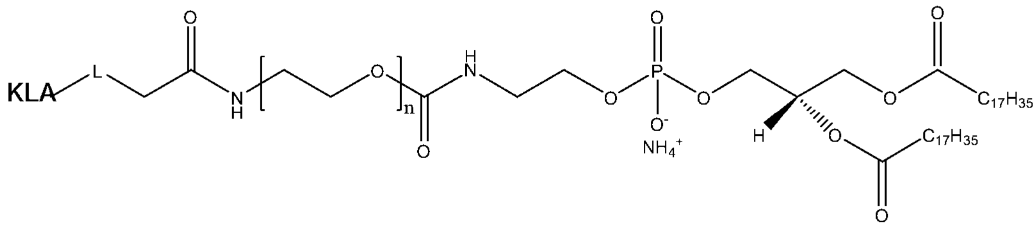

Herein, L is a linker and n is 2 to 1000.

In the conjugate formed by binding the KLA peptide to polyethylene glycol, the bonds between the linker L and the KLA peptide include amide bonds, disulfide bonds, thioether bonds, and succinimidyl thioether bonds.

The KLA peptide of the present invention may be any one selected from the group consisting of the following [Formulae 3] to [Formulae 11].

[Formula 3] KLAL

Lys-Leu-Ala-Leu-Lys-Leu-Ala-Leu-Lys-Ala-Leu-Lys-Ala-Ala-Leu-Lys-Leu-Ala-$NH_2$

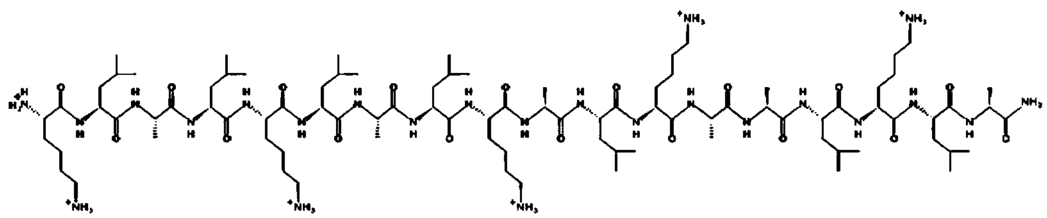

[Formula 4] C1KLAL

Cys-Lys-Leu-Ala-Leu-Lys-Leu-Ala-Leu-Lys-Ala-Leu-Lys-Ala-Ala-Leu-Lys-Leu-Ala-$NH_2$

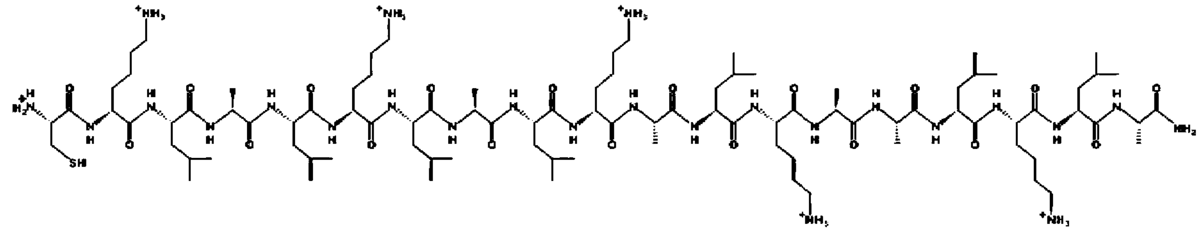

[Formula 5] C19KLAL

Lys-Leu-Ala-Leu-Lys-Leu-Ala-Leu-Lys-Ala-Leu-Lys-Ala-Ala-Leu-Lys-Leu-Ala-Cys-$NH_2$

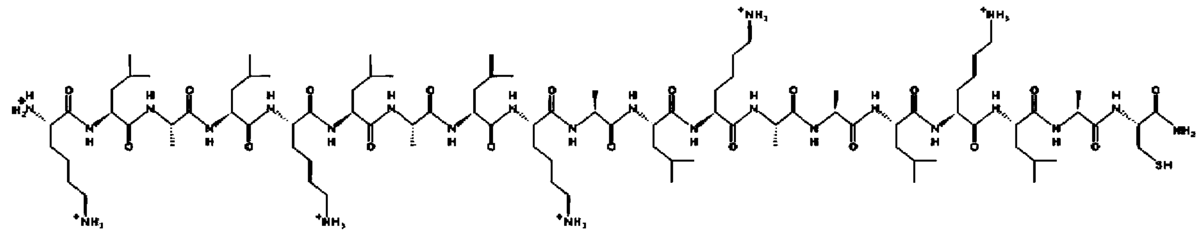

[Formula 6] KLAW

Lys-Leu-Ala-Trp-Lys-Leu-Ala-Leu-Lys-Ala-Leu-Lys-Ala-Ala-Leu-Lys-Leu-Ala-$NH_2$

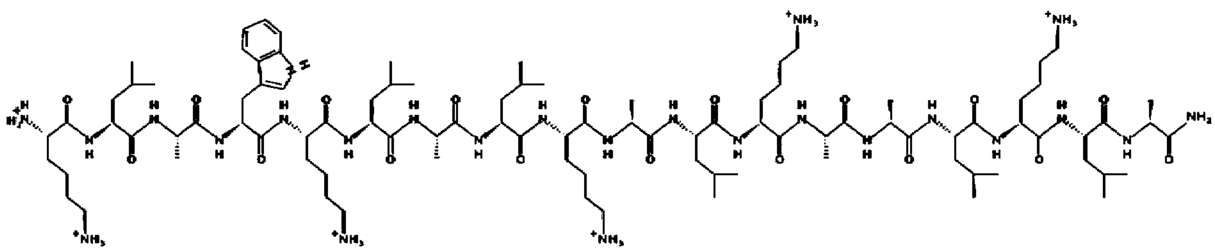

[Formula 7] C1KLAW

Cys-Lys-Leu-Ala-Trp-Lys-Leu-Ala-Leu-Lys-Ala-Leu-Lys-Ala-Ala-Leu-Lys-Leu-Ala-$NH_2$

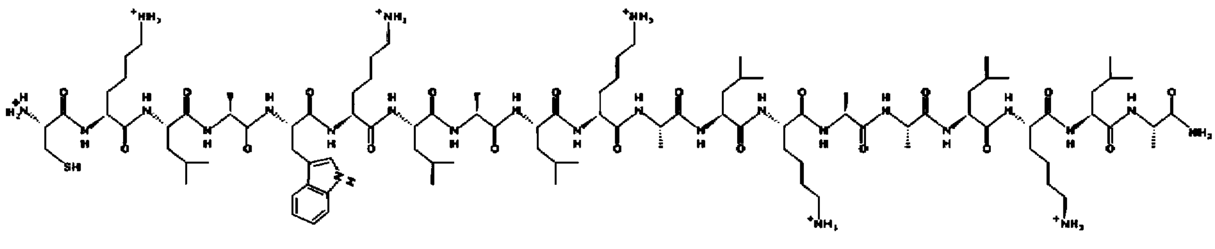

[Formula 8] C19KLAW

Lys-Leu-Ala-Trp-Lys-Leu-Ala-Leu-Lys-Ala-Leu-Lys-Ala-Ala-Leu-Lys-Leu-Ala-Cys-$NH_2$

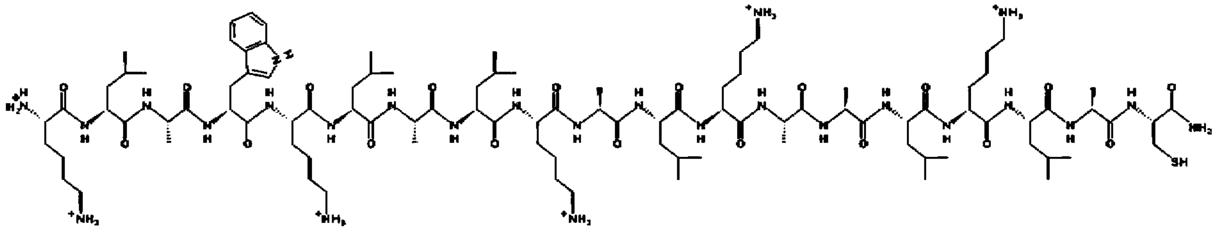

[Formula 9] KLAW2

Lys-Leu-Ala-Trp-Lys-Leu-Ala-Leu-Lys-Ala-Leu-Lys-Ala-Ala-Trp-Lys-Leu-Ala-$NH_2$

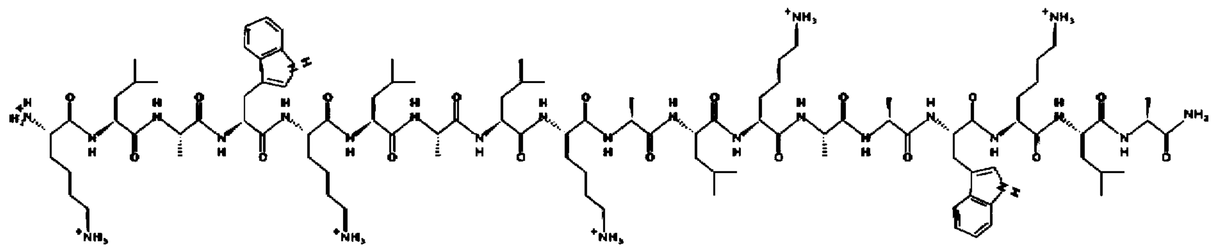

[Formula 10] C1KLAW2

Cys-Lys-Leu-Ala-Trp-Lys-Leu-Ala-Leu-Lys-Ala-Leu-Lys-Ala-Ala-Trp-Lys-Leu-Ala-$NH_2$

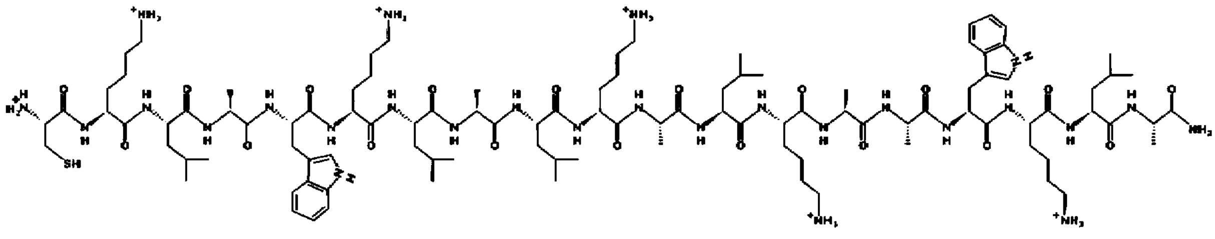

[Formula 11] C19KLAW2

Lys-Leu-Ala-Trp-Lys-Leu-Ala-Leu-Lys-Ala-Leu-Lys-Ala-Ala-Trp-Lys-Leu-Ala-Cys-$NH_2$

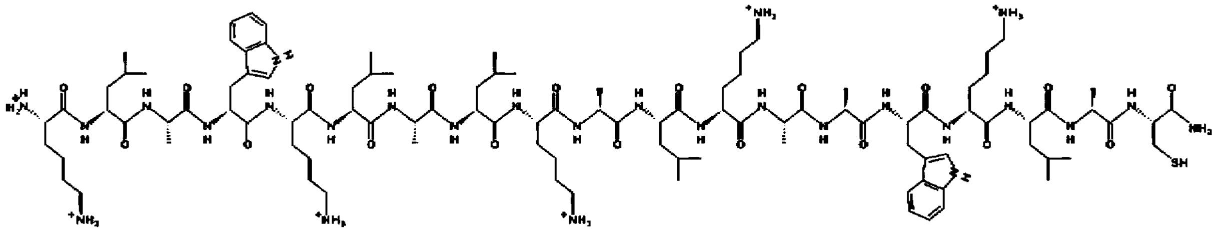

In one embodiment, a DSPE-PEG4k-KLAW peptide conjugate can be prepared by reacting a KLA peptide (C1KLAL, C1KLAW, or C1KLAW2) with DSPE-PEG-MAL-4k as shown in the reaction formula below.

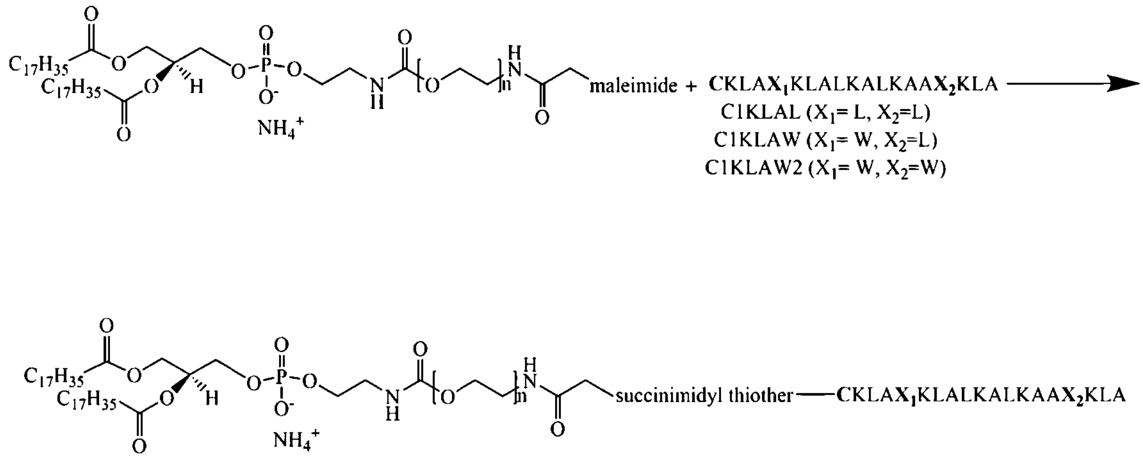


In one embodiment, a DSPE-PEG4k-KLAW peptide conjugate can be prepared by reacting a KLA peptide (C19KLAL, C19KLAW, or C19KLAW2) with DSPE-PEG-MAL-4k as shown in the reaction formula below.

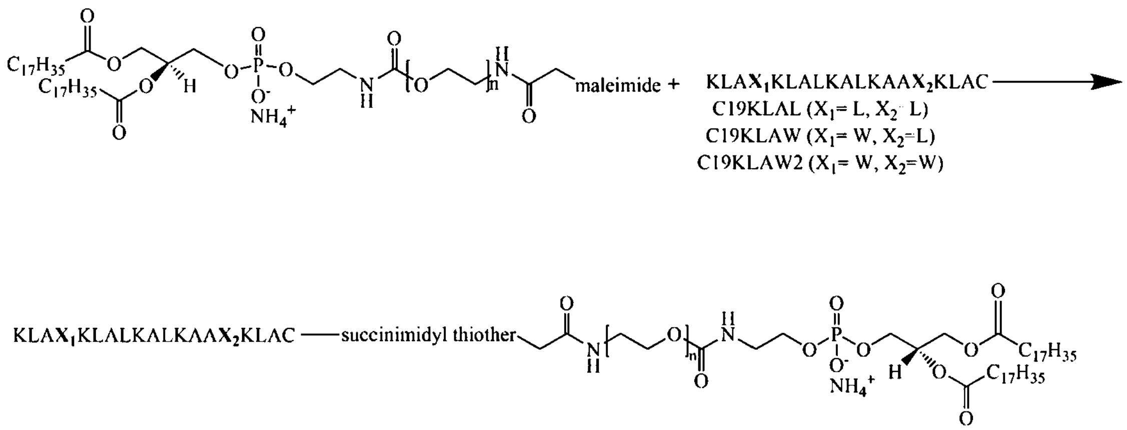


In one embodiment, a DSPE-PEG4k-KLAW peptide conjugate can be prepared by reacting a KLA peptide (KLAL, KLAW, or KLAW2) with DSPE-PEG-NHS as shown in the reaction formula below.

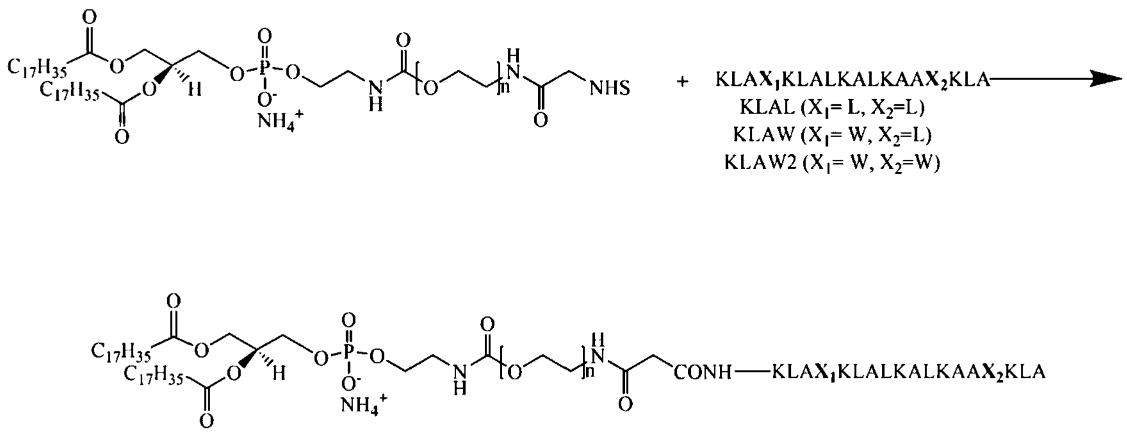


The conjugates of the present invention can enhance the absorption of a biodrug for oral administration in the gastrointestinal tract.

The biodrug may be a peptide, a protein, a polysaccharide, or an antibody.

The peptide may comprise a natural or synthetic protein, a protein fragment, or a peptide analog of a protein

sequence. In addition, the term "peptide" of the present invention may be used interchangeably with the term "polypeptide", which may refer to a compound comprising multiple amino acids linked by peptide bonds.

The protein may comprise a peptide sequence of a protein active in the body, such as an antibody or a fragment thereof, a cytokine, a hormone or an analog thereof, or an antigen, an analog or a precursor thereof.

The polysaccharide may include hyaluronic acid, alginic acid, dextran, pectin, chondroitin sulfate, heparin, hydroxypropyl cellulose, hydroxyethyl cellulose, methyl cellulose, sodium carboxymethyl cellulose, hydroxypropyl methyl cellulose acetate succinate, and derivatives thereof, but not always limited thereto.

The antibody represents a polypeptide or polypeptide complex that specifically recognizes an antigen and binds to it. The antibody may be a whole antibody and any antigen-binding fragment or a single chain thereof. The term "antibody" used in the present invention includes any protein or peptide containing a molecule comprising at least a portion of an immunoglobulin molecule having the biological activity of binding to an antigen. An antibody may comprise a complementarity determining region (CDR) of a heavy or light chain or a ligand binding region thereof, a heavy or light chain variable region, a heavy or light chain constant region, a framework (FR) region, or any portion thereof, or at least a portion of a binding protein.

In addition, the present invention provides a composition for enhancing the absorption of an oral drug in the gastrointestinal tract, which comprises the PEGylated distearoyl phosphatidylethanolamine-KLA peptide conjugateof the present invention as an absorption enhancer.

The composition for enhancing the absorption of an oral drug in the gastrointestinal tract may additionally contain a low molecular weight absorption enhancer having the properties of a surfactant.

The low molecular weight absorption enhancer having the properties of a surfactant includes C10 (sodium caprate), but not always limited thereto.

Hereinafter, the present invention will be described in detail by the following examples and experimental examples.

However, the following examples and experimental examples are only for illustrating the present invention, and the contents of the present invention are not limited thereto.

***PEGylated distearoyl phosphatidylethanolamine-KLA peptide conjugate***

**<Example 1> Preparation of PEGylated distearoyl phosphatidylethanolamine-KLAW peptide conjugate**

The present inventors prepared a PEGylated distearoyl phosphatidylethanolamine-KLAW peptide conjugate to develop a KLAW peptide having a tight junction modulation function as an absorption enhancer for the oral administration of biodrugs.

[Table 1]

| PEG | Molecular weight (Da) | Manufacturer |
|---|---|---|
| DSPE-PEG-MAL-4k | 4,188 | NOF CORPORATION (Japan) |

Specifically, a C19-KLAW peptide in which cysteine (C) was introduced at position 19, the C-terminal part of the KLAW peptide, and DSPE-PEG-MAL-4k, which has one maleimide reactive group and an average molecular weight of 4188, were used. The C19-KLAW peptide was dissolved in phosphate buffer to 5 mg/mL, and DSPE-PEG-MAL-4k was dissolved in 40 mM phosphate buffer (pH 6.0) with a reaction molar ratio of 1:1 (KLAW peptide : DSPE-PEG-MAL-4k), and then reacted at 25°C. A small amount of the product was taken and analyzed by HPLC, and the remaining product was purified twice with deionized water using an osmotic membrane (molecular weight cutoff 3,500), and finally purified with '10 mM phosphate-buffered saline, pH 7.4 (PBS)'. The purified product was analyzed by HPLC. All HPLC analyses were performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm and fluorescence at Ex 280 nm and Em 340 nm.

**<Example 2> Mass spectrometry of PEGylated distearoyl phosphatidylethanolamine-KLAW peptide conjugate**

The mass of the PEGylated distearoyl phosphatidylethanolamine-KLAW peptide conjugate before the reaction was measured by MALDI-TOF mass spectrometry.

At this time, the MALDI-TOF mass spectrometry was performed using a Microflex MALDI-TOF Mass Spectrometer (Bruker Daltonics, Bremen, Germany). For the analysis of DSPE-PEG-MAL-4k and DSPE-PEG4k-KLAW, the matrix sinapic acid and the solvent (50% acetonitrile in 0.1% TFA) were mixed, loaded onto a sample stage, and dried to

prepare a mass spectrometry sample, which was then subjected to mass spectrometry.

As a result, as shown in Table 2, before the reaction, the DSPE-PEG-MAL-4k was measured to have a molecular weight of approximately 3990, and the DSPE-PEG-MAL-4k-C19KLAW peptide conjugate was confirmed to have the KLAW peptide conjugated through the mass difference.

[Table 2] Mass spectrometry results of DSPE-PEG-MAL-4k and DSPE-PEG4k-KLAW conjugate

| Sample | **Mw (Da)** |
|---|---|
| DSPE-PEG-MAL-4k | 3990.00 |
| DSPE-PEG4k-KLAW | 6592.37 |
| Mw: weight average molecular weight | |

**<Example 3> Measurement of hydrodynamic diameter of PEGylated distearoyl phosphatidylethanolamine-KLAW peptide conjugate**

The hydrodynamic diameter of the PEGylated distearoyl phosphatidylethanolamine before the reaction and the PEGylated distearoyl phosphatidylethanolamine-KLAW peptide conjugate prepared in Example 1 were measured.

Specifically, the hydrodynamic diameter was measured by dynamic light scattering using Dynapro NanoStar (Wyatt Technology). The DSPE-PEG-MAL-4k and the DSPE-PEG4k-KLAW conjugate were measured at concentrations of 2 mg/mL and 200 μM (as KLAW concentration), respectively, and used after being diluted with 10 mM PBS (pH 7.4).

As a result, in the case of the DSPE-PEG4k-KLAW conjugate, the hydrodynamic diameter was increased by approximately 2.2 nm and the polydispersity (%Pd) was increased by approximately 19.7% compared to the peptide-unconjugated DSPE-PEG4k.

**<Example 4> Results of stability test for trypsin hydrolysis of PEGylated distearoyl phosphatidylethanolamine-KLAW peptide conjugate**

The prepared PEGylated distearoyl phosphatidylethanolamine-KLAW peptide conjugate was confirmed to have a protective effect on the KLAW peptide from proteolytic enzymes present in the body through trypsin digestion experiments.

Specifically, the KLAW peptide and the DSPE-PEG-4k-KLAW conjugate were diluted with 50 mM Tris HCl buffer (pH 6.8) to a concentration of 100 μM. The trypsin solution was prepared to have a final activity of 9.35 BAEE U/mL and was mixed with the KLAW peptide and DSPE-PEG4k-KLAW conjugate solutions in a 1:1 volume ratio, and then incubated at 37°C, 300 rpm. After predetermined times (5, 10, 20, 30, and 60 minutes), the enzyme reaction was terminated using 5% TFA and analyzed by HPLC. HPLC was performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm.

As a result, as shown in Figure 1, the PEGylated distearoyl phosphatidylethanolamine-KLAW peptide conjugate (DSPE-PEG4K-KLAW) exhibited resistance to trypsin digestion and had a half-life that was 50-fold increased compared to the KLAW peptide.

**<Example 5> Cytotoxicity test of PEGylated distearoyl phosphatidylethanolamine-KLAW peptide conjugate**

The cytotoxicity of the prepared PEGylated distearoyl phosphatidylethanolamine-KLAW peptide conjugate and KLAW peptide was measured and compared.

First, a human colorectal adenocarcinoma cell line (Caco-2 cells) was seeded at $9 \times 10^3$ cells/well in a 96-well plate and cultured in MEM (Minimum Essential Medium eagle) supplemented with 10% fetal bovine serum (FBS) and 1% antibiotic/antimycotic for 3 to 5 days in a Heracell 150i incubator (ThermoScientific, hereinafter referred to as incubator) at 37°C, 5% $CO_2$. All samples were diluted in HBSS and processed. For MTT assay, the samples were treated at various concentrations for 60 minutes. Then, the MTT sample was treated at a concentration of 0.5 mg/mL and cultured in a cell incubator for 2 hours. The formed formazan was then dissolved in dimethyl sulfoxide and the absorbance was measured at UV 540 nm using SpectraMax ABS Plus (Molecular device). LDH assay was performed using the CytoTox96 Non-Radioactive assay kit (Promega Corporation). After treating the samples of each condition for 30 minutes, the supernatant was diluted tenfold with HBSS and loaded into a 96-well plate, to which a substrate was then added and left at room temperature and protected from light for 30 minutes. After treating a reagent to stop the reaction, the absorbance was measured at UV 540 nm using SpectraMax ABS Plus (Molecular device).

As shown in Figures 2, 3, 4 and 5, in both the MTT assay and LDH assay, 10 μM of the KLAW peptide and 200 μM

of the DSPE-PEG4k-KLAW peptide conjugate exhibited similar levels of toxicity. That is, it was confirmed that the DSPE-PEG4k-KLAW peptide conjugate showed approximately 20-fold reduced cytotoxicity compared to the KLAW peptide. Therefore, it was confirmed that the cytotoxicity of the KLAW peptide was reduced through the PEGylated distearoyl phosphatidylethanolamine conjugation.

**<Example 6> Effect of inducing tight junction modulation function of PEGylated distearoyl phosphatidylethanolamine-KLAW peptide conjugate**

To confirm the effect of inducing tight junction modulation function of the PEGylated distearoyl phosphatidylethanolamine-KLAW peptide conjugate, the prepared PEGylated distearoyl phosphatidylethanolamine-KLAW peptide conjugate was treated on a Caco-2 cell monolayer membrane, and then transepithelial/endothelial electrical resistance (TEER) was measured.

For the measurement of TEER, Caco-2 cells were cultured in a 12-well plate, Transwell (Corning, USA). Caco-2 cells were seeded at $5x10^4$ cells/well in Transwell inserts and cultured for 21 days. During the first week of culture, the medium was replaced every two days, and during the remaining two weeks, the medium was replaced daily. TEER was measured using a Millicell ERS-2 Volt-ohmmeter (Millipore Corporation, USA). The PEGylated distearoyl phosphatidylethanolamine-KLAW peptide conjugate sample was diluted in HBSS and treated, and TEER was measured at 15-minute intervals for 60 minutes of treatment. Afterwards, the medium was replaced with MEM and the recovery pattern of the epithelial cell resistance value was measured. TEER was calculated as follows.

$$\text{TEER } (\Omega \text{x cm}^2) = [\text{TEER}_{measured} (\Omega) - \text{TEER}_{blank} (\Omega)] \text{ x A } (\text{cm}^2)$$

0.1% Triton X-100 was used as a positive control, and HBSS without the sample was treated as a negative control. As an additional comparison group, the KLAW peptide was used at a concentration of 10 μM, at which reversible recovery of toxicity was observed in the cytotoxicity test. As an example of the PEGylated distearoyl phosphatidylethanolamine-KLAW peptide conjugate, experiments were performed with the DSPE-PEG4k-KLAW.

As a result, as shown in Figure 6, 7, it was confirmed that all the DSPE-PEG4k-KLAW conjugates reduced TEER values dose-dependently. The above results indicate that the PEGylated distearoyl phosphatidylethanolamine-KLAW peptide conjugate induces a tight junction modulation function. In addition, when observing the recovery pattern of TEER values, the DSPE-PEG4k-KLAW conjugate was shown to restore the TEER value to levels above the negative control up to 200 μM in the investigated concentration range, and was shown to restore the TEER value to levels similar to the negative control at all investigated concentrations.

**<Example 7> Effect of enhancing absorption of peptide drugs using PEGylated distearoyl phosphatidylethanolamine-KLAW peptide conjugate as absorption enhancer (1)**

To confirm the absorption-enhancing effect on peptide drugs, the absorption-enhancing effect of the prepared PEGylated distearoyl phosphatidylethanolamine-KLAW peptide conjugate on the peptide drug Leuprolide (molecular weight 1209.4 Da) was observed in a Caco-2 cell monolayer membrane.

First, Leuprolide was mixed using HBSS as a solvent to a final concentration of 400 μM, and the PEGylated distearoyl phosphatidylethanolamine-KLAW peptide conjugate was mixed using HBSS as a solvent to a preset concentration. As the PEGylated distearoyl phosphatidylethanolamine-KLAW peptide conjugates, those prepared through DSPE-PEG-MAL-4K were used. To compare the effectiveness of the PEGylated distearoyl phosphatidylethanolamine-KLAW conjugate, its effectiveness was compared with that of the PEG5k-KLAW prepared using phospholipid-free mPEG-MAL-5k. Samples of each condition were treated into Transwells that had formed a Caco-2 cell monolayer by culturing for 21 days, and then cultured at 37°C, 5% $CO_2$ for 60 minutes. Then, 200 microliters of samples were taken from the upper part (donor site) and the lower part (acceptor site) of the monolayer, and the amount of Leuprolide was analyzed by HPLC. HPLC was performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm and fluorescence at Ex 280 nm and Em 340 nm.

As a result, as shown in Figure 8, compared to 10 μM of the KLAW peptide, the PEGylated distearoyl phosphatidylethanolamine-KLAW peptide conjugate using DSPE-PEG-MAL-4K showed a significantly higher absorption-enhancing effect on Leuprolide. In addition, in the case of the phospholipid-free PEG5k-KLAW conjugate, no significant difference from the control group was observed up to a concentration of 100 μM. These results indicate that the phospholipid structure plays an important role in enhancing absorption in the PEGylated distearoyl phosphatidylethanolamine-KLAW peptide conjugate (DSPE-PEG4K-KLAW) of the present invention.

**<Example 8> Effect of enhancing absorption of peptide drugs using PEGylated distearoyl phosphatidylethanolamine-KLAW peptide conjugate as absorption enhancer (2)**

To further confirm the absorption-enhancing effect on peptide drugs, the absorption-enhancing effect of the prepared PEGylated distearoyl phosphatidylethanolamine-KLAW peptide conjugate on Semaglutide (molecular weight 4113.6 Da) was observed in a Caco-2 cell monolayer membrane.

First, the PEGylated distearoyl phosphatidylethanolamine-KLAW peptide conjugate was mixed using HBSS as a solvent to concentrations of 10 μM to 300 μM, and Semaglutide was mixed using HBSS as a solvent to a concentration of 200 μM. The PEGylated distearoyl phosphatidylethanolamine-KLAW peptide conjugate prepared using DSPE-PEG-MAL-4K was used, and the experiment was conducted using the KLAW peptide at a concentration of 10 μM as a comparison target. The PEGylated distearoyl phosphatidylethanolamine-KLAW peptide conjugate samples of each concentration condition were treated on the donor site of Transwells that had formed a Caco-2 cell monolayer by culturing for 21 days, and then cultured at 37°C, 5% $CO_2$ for 60 minutes. After removing the treated sample, Transwells were washed with HBSS solution, treated with Semaglutide sample, and incubated for 60 minutes under the same conditions. Then, 200 microliters of samples were taken from the upper part (donor site) and the lower part (acceptor site) of the monolayer, and the amount of Semaglutide was analyzed by HPLC. HPLC was performed using Thermo Ultimate 3000 HPLC system and Gemini C18 column (4.6 x 150 mm, 5 micron particle size, Phenomenex). The mobile phase was 0.1% trifluoracetic acid in water and acetonitrile, and the flow rate was 1 mL/min. The eluted material was detected by measuring absorbance at UV 280 nm and fluorescence at Ex 280 nm and Em 340 nm.

As a result, as shown in Figure 9, the PEGylated distearoyl phosphatidylethanolamine-KLAW peptide conjugate (DSPE-PEG4k-KLAW) of the present invention showed a significantly higher absorption-enhancing effect on Semaglutide than the control group in the group treated with a concentration of 250 μM or higher.

**<Example 9> Effect of enhancing absorption of protein drugs using PEGylated distearoyl phosphatidylethanolamine-KLAW peptide conjugate as absorption enhancer (3)**

To confirm the absorption-enhancing effect on antibody drugs, the absorption-enhancing effect of the prepared PEGylated distearoyl phosphatidylethanolamine-KLAW peptide conjugate on human immunoglobulin-G (molecular weight approximately 150 kDa) was observed in a Caco-2 cell monolayer membrane.

First, human immunoglobulin-G was mixed using HBSS as a solvent to a final concentration of 20 mg/mL, and the PEGylated distearoyl phosphatidylethanolamine-KLAW peptide conjugate was mixed using HBSS as a solvent to a preset concentration. The PEGylated distearoyl phosphatidylethanolamine-KLAW peptide conjugate prepared using DSPE-PEG-MAL-4K was used. Samples of each condition were treated into Transwells that had formed a Caco-2 cell monolayer by culturing for 21 days, and then cultured at 37°C, 5% $CO_2$ for 1 hour. To determine the concentration of human immunoglobulin-G to be treated on the upper part (donor site) of the monolayer membrane for the calculation of the apparent permeability coefficient, the concentration of human immunoglobulin-G before mixing 1:1 with the DSPE-PEG4K-KLAW was measured using Lunatic (Unchained Labs, CA, USA), a UV-Vis spectrophotometer, and half of the measured value was substituted. After the permeability test, samples were taken from the lower part (acceptor site) of the monolayer and analyzed by fluorescamine assay.

As a result, as shown in Figure 10, the apparent permeability coefficient significantly increased in the group treated with the DSPE-PEG4K-KLAW peptide conjugate at concentrations of 100 to 200 uM compared to the control group, and a dose-dependent increase in permeability was observed.

## Claims

1. A PEGylated distearoyl phosphatidylethanolamine-KLA peptide conjugate **characterized by** having a structure represented by the following formula 2:

[Formula 2]

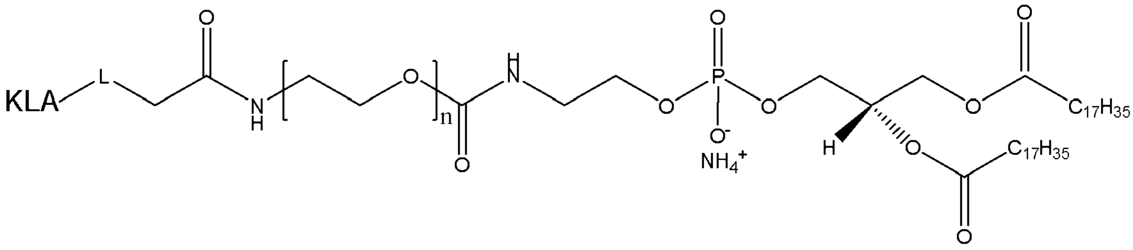

wherein,

KLA is a KLAL peptide or a modified KLAL peptide, wherein the KLAL peptide is a polypeptide having a length of 12 to 32 amino acids composed of three kinds of amino acids, Lys, Leu, and Ala, and the modified KLAL peptide is a polypeptide having a length of 13 to 40 amino acids composed of three kinds of amino acids, Lys, Leu, and Ala, plus one to two additional amino acids selected from Trp and Cys,

n is 2 to 2000, and

L is a linker selected from the following formulas:

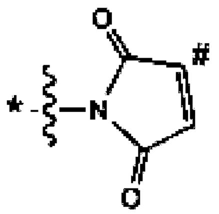

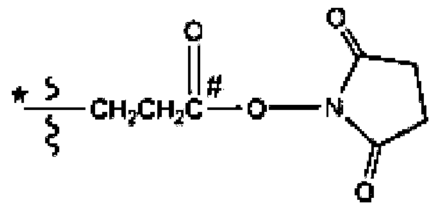

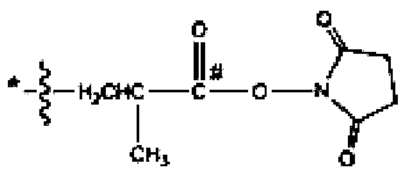

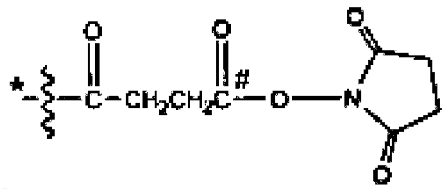

wherein, * indicates the binding point of PEG and the linker L, and # indicates the binding point of the linker L and the KLA structure.

**2.** The conjugate according to claim 1, wherein the n is 10 to 500.

**3.** The conjugate according to claim 1, wherein the KLA peptide is any one selected from the group consisting of the following Formulas 3 to 11:

[Formula 3]

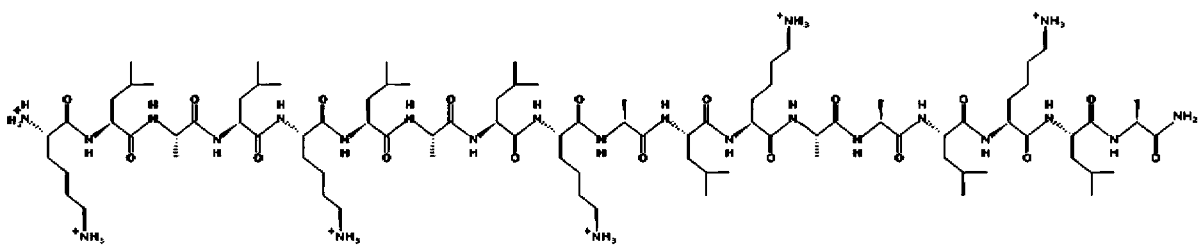

[Formula 4]

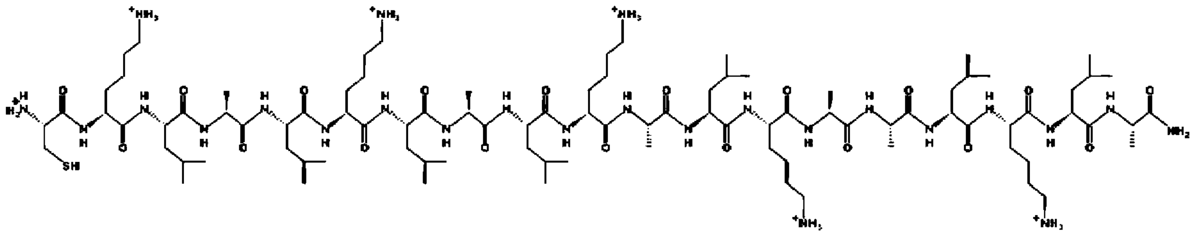

[Formula 5]

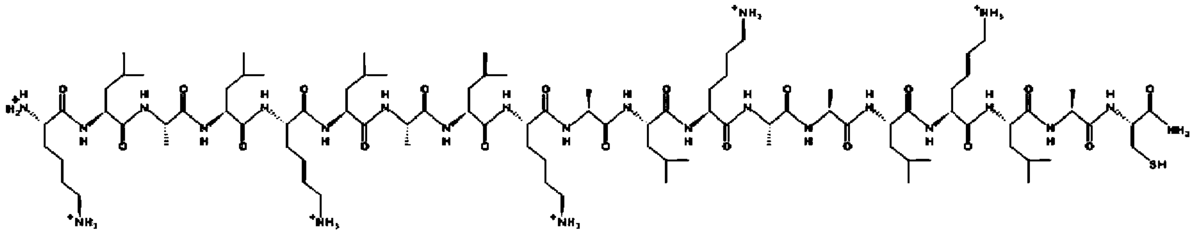

[Formula 6]

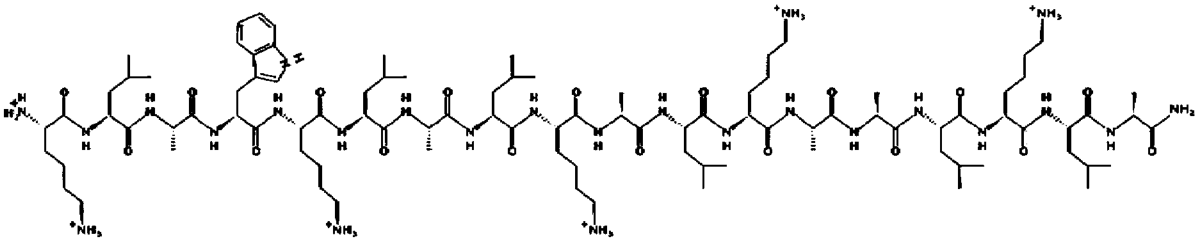

[Formula 7]

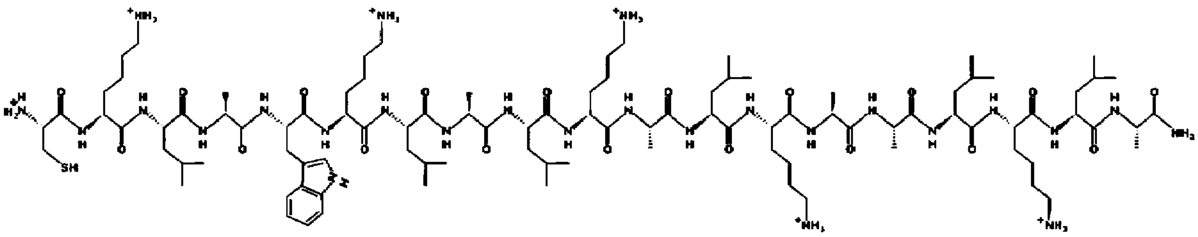

[Formula 8]

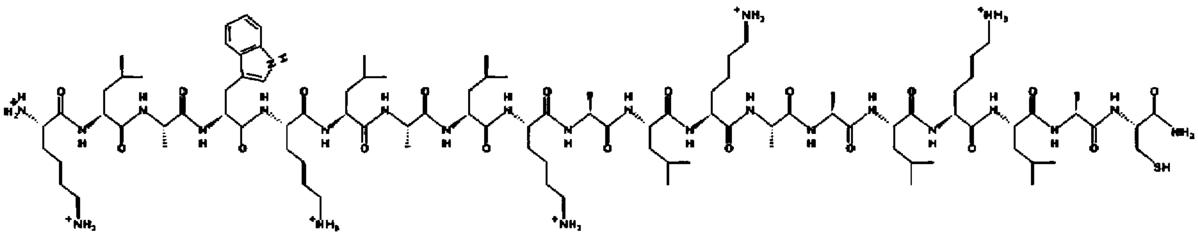

[Formula 9]

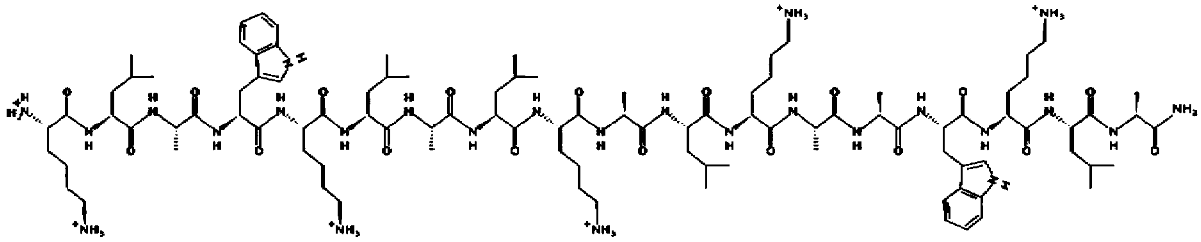

[Formula 10]

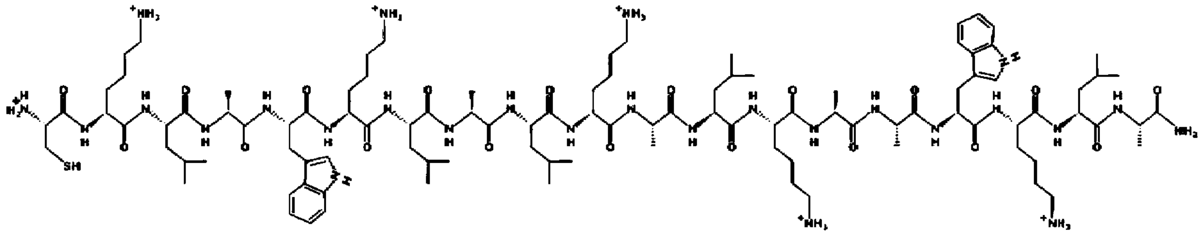

[Formula 11]

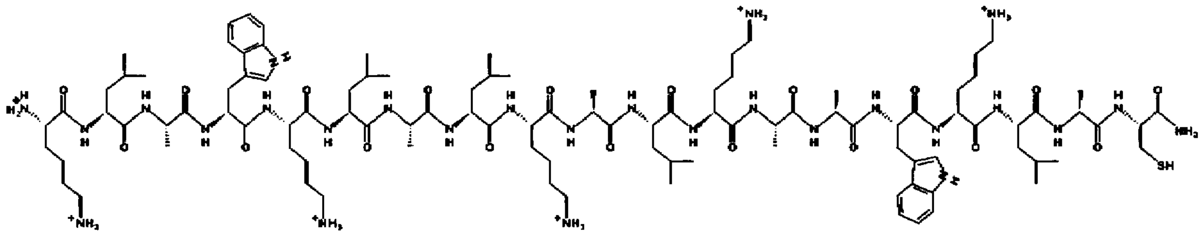

**4.** The conjugate according to claim 1, wherein the KLA peptide modulates tight junctions.

**5.** The conjugate according to claim 1, wherein the conjugate enhances the absorption of biodrugs for oral administration.

**6.** The conjugate according to claim 5, wherein the biodrugs are peptides, proteins, polysaccharides, or antibodies.

**7.** A composition for enhancing absorption of a biodrug for oral administration, comprising the conjugate of claim 1 or 2.

**8.** The conjugate according to claim 1, wherein the L is represented by the following formula

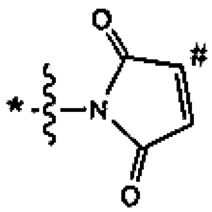

wherein, * indicates the binding point of PEG and the linker L, and # indicates the binding point of the linker L and the KLA structure.

FIG. 1

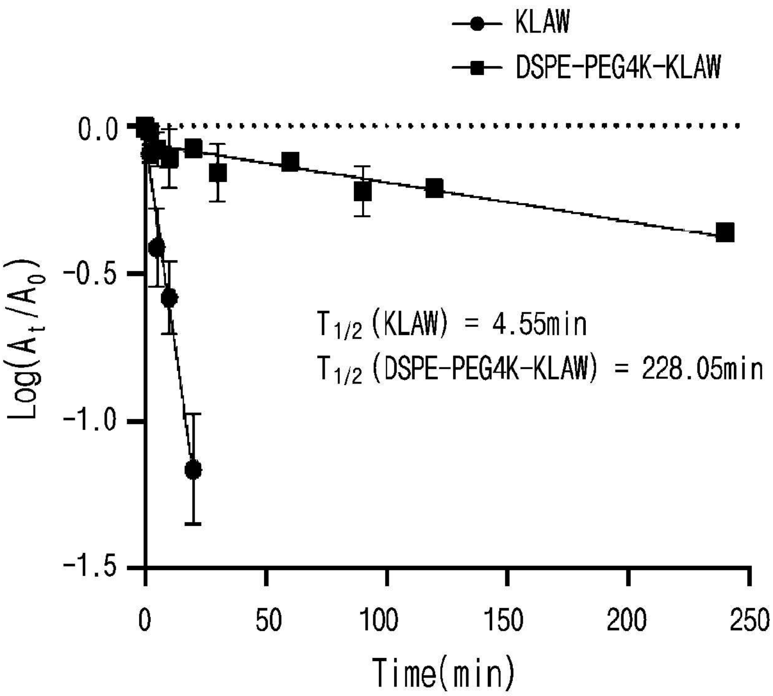
KLAW
DSPE-PEG4K-KLAW
0.0
-0.5
-1.0
-1.5
Log(At/A0)
0
50
100
150
200
250
Time(min)
T1/2 (KLAW) = 4.55min
T1/2 (DSPE-PEG4K-KLAW) = 228.05min

FIG. 2

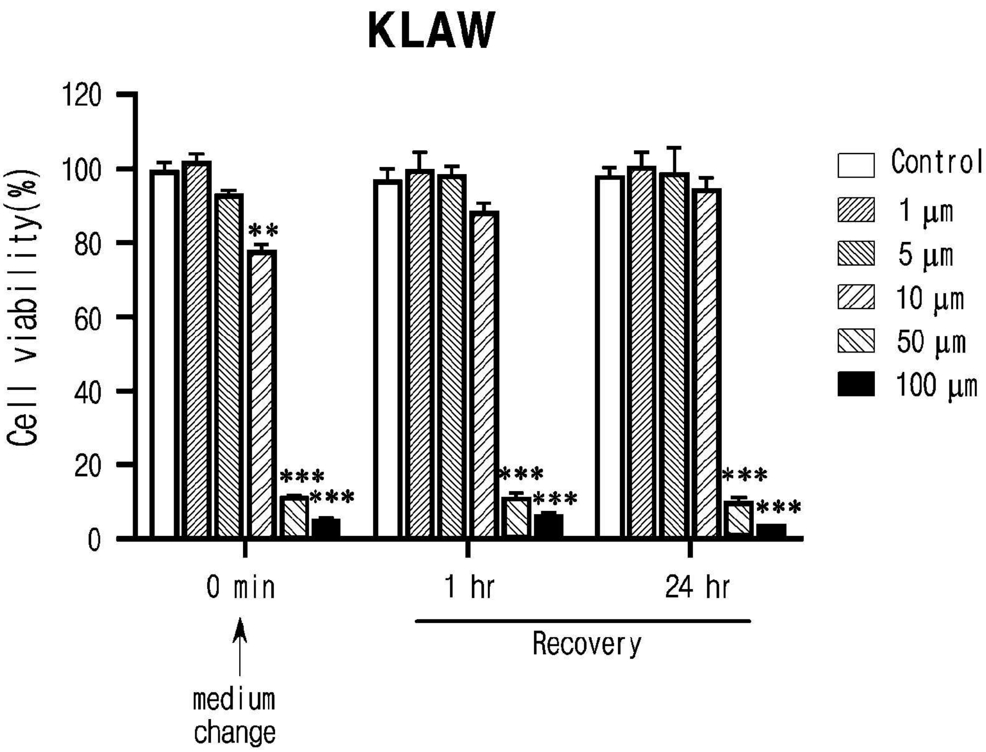
KLAW
Cell viability(%)
120
100
80
60
40
20
0
**
***
***
***
***
***
***
0 min
1 hr
24 hr
Recovery
medium
change
Control
1 μm
5 μm
10 μm
50 μm
100 μm

FIG. 3

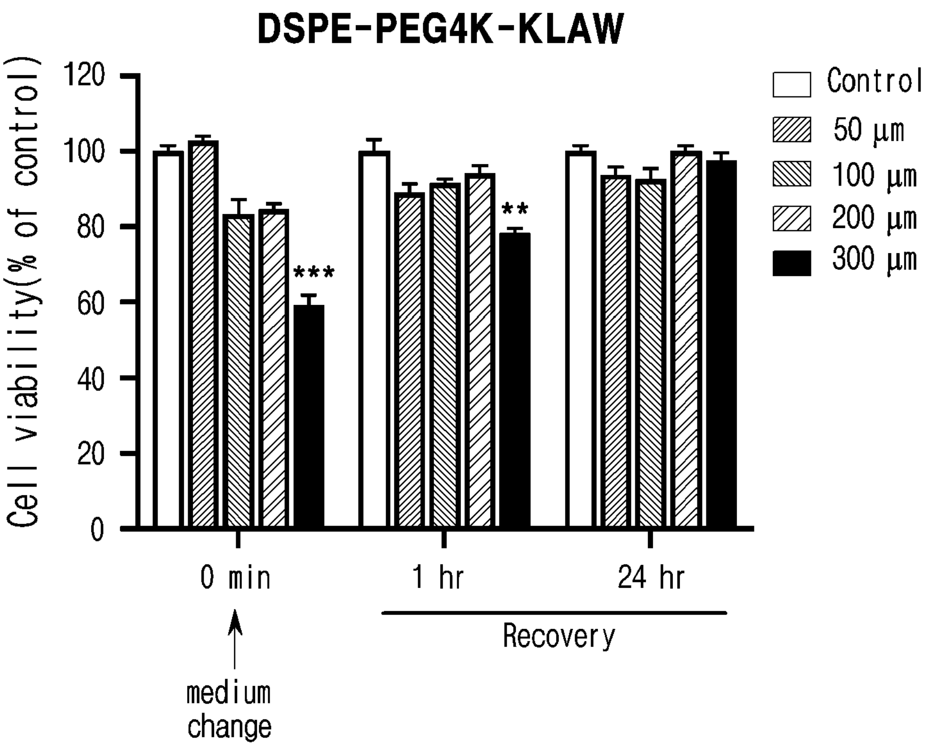
DSPE-PEG4K-KLAW
Cell viability(% of control)
120
100
80
60
40
20
0
***
**
0 min
1 hr
24 hr
Recovery
medium change
Control
50 μm
100 μm
200 μm
300 μm

FIG. 4

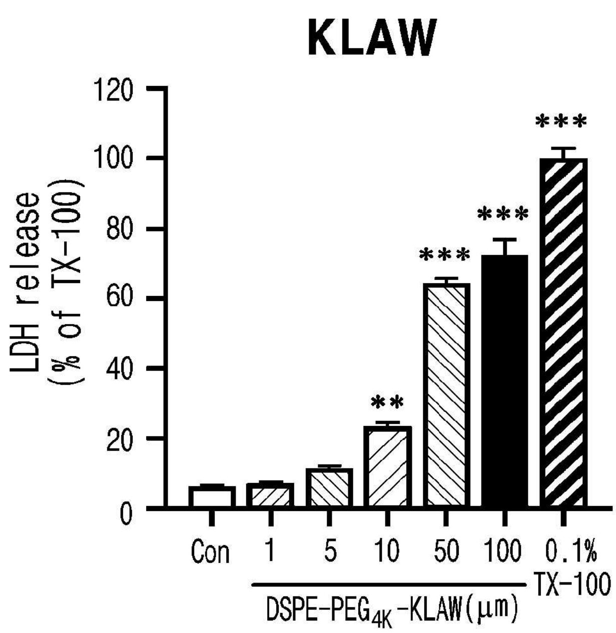
KLAW
LDH release (% of TX-100)
120
100
80
60
40
20
0
**
***
***
***
Con
1
5
10
50
100
0.1% TX-100
DSPE-PEG4K-KLAW(μm)

FIG. 5

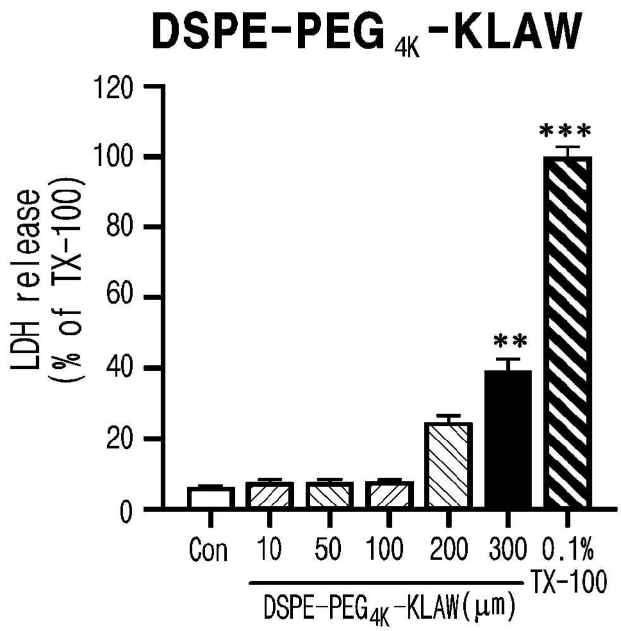
DSPE-PEG$_{4K}$-KLAW
LDH release (% of TX-100)
120
100
80
60
40
20
0
***
**
Con
10
50
100
200
300
0.1% TX-100
DSPE-PEG$_{4K}$-KLAW(μm)

FIG. 6

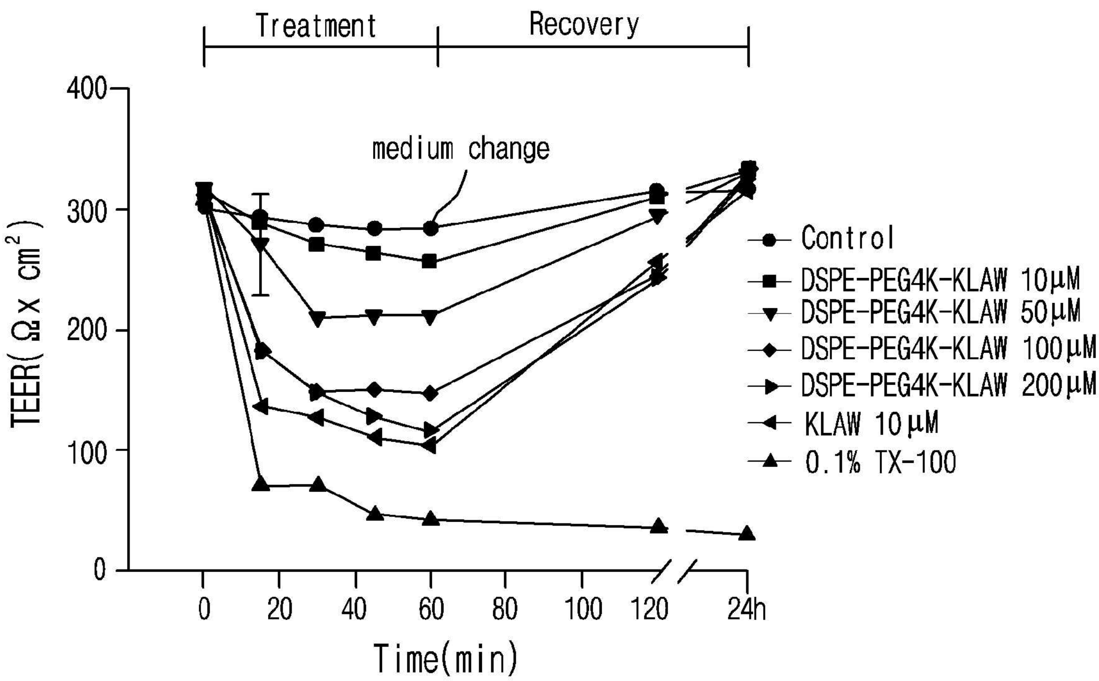
Treatment
Recovery
medium change
TEER(Ω x cm$^2$)
400
300
200
100
0
0
20
40
60
80
100
120
24h
Time(min)
Control
DSPE-PEG4K-KLAW 10μM
DSPE-PEG4K-KLAW 50μM
DSPE-PEG4K-KLAW 100μM
DSPE-PEG4K-KLAW 200μM
KLAW 10μM
0.1% TX-100

FIG. 7

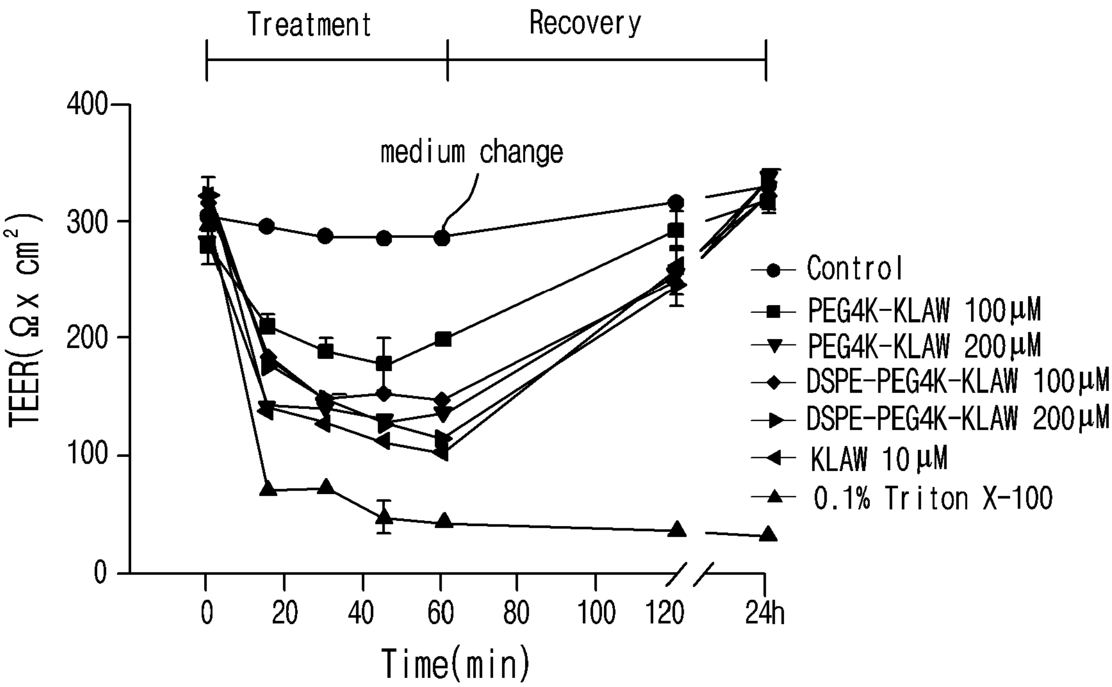
Treatment
Recovery
medium change
400
300
200
100
0
TEER( Ω x cm²)
0
20
40
60
80
100
120
24h
Time(min)
Control
PEG4K-KLAW 100μM
PEG4K-KLAW 200μM
DSPE-PEG4K-KLAW 100μM
DSPE-PEG4K-KLAW 200μM
KLAW 10μM
0.1% Triton X-100

FIG. 8

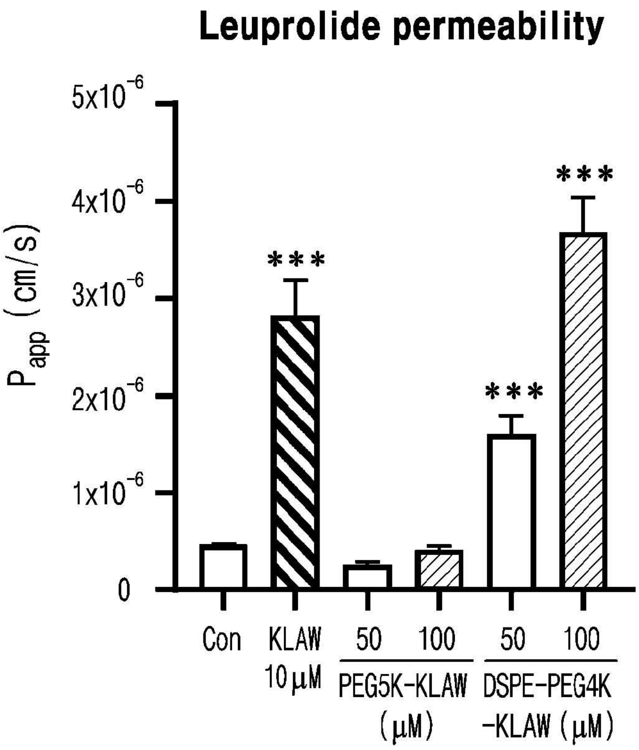
Leuprolide permeability
P_app (cm/s)
5x10^-6
4x10^-6
3x10^-6
2x10^-6
1x10^-6
0
***
***
***
Con
KLAW 10μM
50
100
PEG5K-KLAW (μM)
50
100
DSPE-PEG4K -KLAW (μM)

FIG. 9

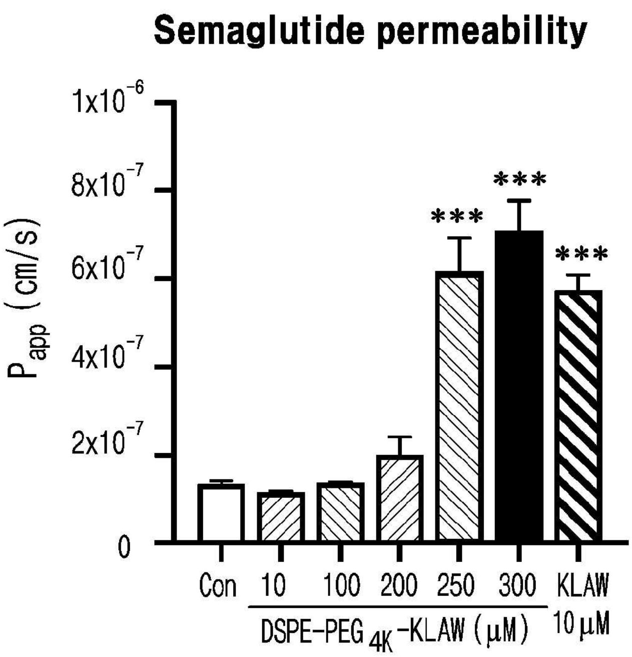
Semaglutide permeability
P_app (cm/s)
1x10^-6
8x10^-7
6x10^-7
4x10^-7
2x10^-7
0
***
***
***
Con
10
100
200
250
300
DSPE-PEG 4K -KLAW (μM)
KLAW 10μM

FIG. 10

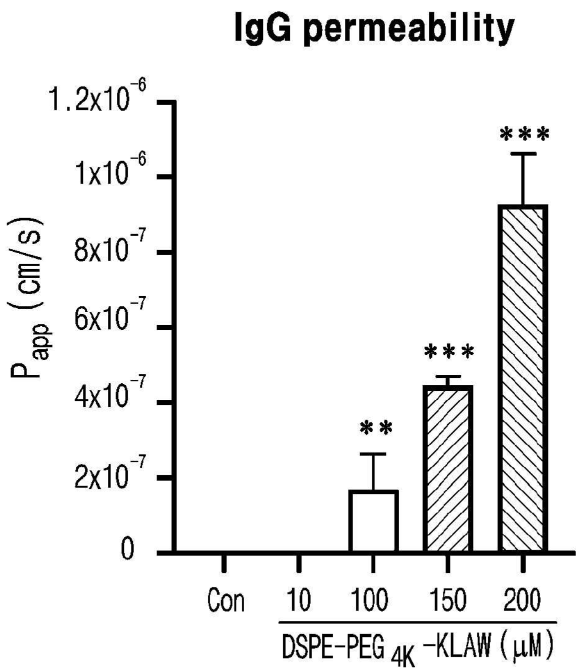
IgG permeability
$P_{app}$ (cm/s)
1.2x10$^{-6}$
1x10$^{-6}$
8x10$^{-7}$
6x10$^{-7}$
4x10$^{-7}$
2x10$^{-7}$
0
***
***
**
Con
10
100
150
200
DSPE-PEG $_{4K}$ -KLAW (μM)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- WO 2007014391 A
- US 20070154449 A

### Non-patent literature cited in the description

- *Adv. DrugDeliv. Rev*, 2016, vol. 106, 277-319